# EUROPÄISCHE PATENTSCHRIFT

(11) **EP 1 160 154 B1**
(45) Veröffentlichungstag und Bekanntmachung des Hinweises auf die Patenterteilung: **05.10.2005**
(21) Anmeldenummer: 01109228.5
(22) Anmeldetag: 14.04.2001
(51) Int. Cl.: B62M 25/02, B62M 25/04

(54) **Schaltbetätigung für Mehrgangnaben für Fahrräder**
Gear change for bicycle hub
Changement de vitesse pour moyeu

(30) Priorität: 27.05.2000 DE 10026472
(43) Veröffentlichungstag der Anmeldung: 05.12.2001
(73) Patentinhaber: SRAM Deutschland GmbH, 97404 Schweinfurt (DE)
(72) Erfinder: Steuer, Werner, 97424 Schweinfurt (DE); Blaschke, Georg, 97505 Geldersheim (DE)

(56) Entgegenhaltungen:
- EP-A- 0 350 791
- EP-A- 0 570 948
- DE-A- 3 314 229
- DE-A- 3 514 885
- DE-A- 4 221 728
- US-A- 863 422
- US-A- 2 609 712
- US-A- 3 990 715
- US-A- 4 065 984
- US-A- 5 182 962

## Beschreibung

Die Erfindung bezieht sich auf eine Schaltbetätigung für Mehrgangnaben für Fahrräder gemäß dem Oberbegriff des Anspruchs 1.

Mit der deutschen Patentschrift Nr. 436 419 ist eine Vorrichtung zum Umschalten der Übersetzung von Fahrrädern bekannt geworden, die eine durch die hohle Hinterradachse hindurchgehende Zugstange und eine auf letztere wirkende, in einem auf der Achse aufgeschraubten Tragstück gelagerten Winkelhebel aufweist, wobei das den Drehbolzen umfassende Lagerauge des Winkelhebels an der Seite einen Schlitz besitzt zum Abstreifen des Winkelhebels von seinem Drehbolzen ohne Lösen des Letzteren.

Es handelt sich also um ein Gehäuse, welches auf der Nabenachse verschraubt ist mit einem Drehbolzen, um welchen der Winkelhebel gelagert ist und durch die bei der Betätigung auftretenden Kräfte in dieser Position gehalten wird. Eine Demontage ohne Werkzeug ist hier möglich, sofern man den Winkelhebel von seinem Betätigungszug gelöst hat. Der Winkelhebel wird, nachdem er aus seiner Hakenverbindung mit dem Gestänge gelöst ist, aus dem Gehäuse herausgedreht. Die Wiedermontage dürfte in sofern schwieriger sein, als der Winkelhebel wieder in eine Hakenverbindung zum Gestänge eingehängt werden muss.

In DE 33 14 229 ist eine Schaltbetätigung für Fahrrad-Mehrgangnaben gezeigt, deren Lage an der Nabenachse durch ein Ineinandergreifen von Vorsprüngen im Gehäuse der Schaltbetätigung und von am Umfang der Achsmutter angeformten Nuten gesichert ist. Bei einer Betätigung durch einen Seilzug wird ein Schaltstift in der Zentralbohrung der Nabe gegen die Rückstellkraft einer Feder in Achsrichtung bewegt. Mit einem Lösen der Achsmutter kann die komplette Schaltbetätigung von der Nabenachse demontiert werden.

Als Fortentwicklung ist die vorliegende Erfindung als Achsschalteinrichtung ausgeführt, die aus einem Gehäuse besteht, in welchem ein Schwenkhebel um eine Schwenkachse drehbar angeordnet ist und durch einen Schieber von außen manuell verschoben werden kann, um die Achsschalteinrichtung auf der Nabenachse montieren und wieder demontieren zu können, wobei ein Formschluss mit einem Kraftübertragungselement hergestellt oder aufgelöst wird, welches mit dem Getriebe der Mehrgangnabe zum Zwecke des Wechsels der Gangstufen in einer Zentralbohrung einer Nabenachse angeordnet ist.

Der Schwenkhebel ist mit einem drahtförmigen Übertragungsteil mit einer Fernbedienung, die vom Fahrradfahrer bedienbar ist, verbunden und bildet mit dieser eine Baueinheit, die sowohl bei der Erstausrüstung des Fahrrades als auch bei der Reparatur auf einfache Weise am Fahrrad angebracht werden kann. Die Baueinheit kann voreingestellt sein, so dass es möglich ist, Baueinheiten für verschiedene Nabentypen für die Montage am Fahrrad bereitzustellen, ohne zusätzliche Qualitätskontrollen am Montageband durchführen zu müssen.

Das Kraftübertragungselement weist einen Kopf auf, den ein gabelförmiges Ende des Schwenkhebels hintergreift, wobei bei Betätigung des Schwenkhebels das gabelförmige Ende den Kopf des Betätigungselementes aus der Mehrgangnabe herauszieht, in welcher eine Rückholfeder dafür sorgt, dass beim Rückwärtsschalten durch die Fernbedienung das Kraftübertragungselement und somit der Schwenkhebel wieder in ihre Ursprungslage zurückgezogen werden. Der Schieber im Gehäuse der Achsschalteinrichtung bewirkt, dass gewünschtenfalls in jeder Gangposition die Achsschalteinrichtung durch Lösen der Formschlussverbindung zwischen dem gabelförmigen Ende und dem Kopf der Kraftübertragungseinrichtung demontierbar und folglich wieder montierbar wird, sofern der Schieber in der ausgerückten Position gehalten wird. Beim Betätigen des Schiebers wird das gabelförmige Ende vorzugsweise parallel zu der Schwenkachse des Schwenkhebels verschoben, so dass sich das gabelförmige Ende vom Kopf weg bewegt und der Formschluss aufgehoben wird. In diesem Fall kann die Achsschalteinrichtung von der Nabenachse abgezogen werden. Die eben beschriebene technische Lösung ist als eine von mehreren zu betrachten, die selbstverständlich konstruktiv möglich sind, was die Auflösung des Formschlusses betrifft: Durch die Betätigung des Schiebers kann die Schwenkachse auch in einer zu der vorbeschriebenen Verschieberichtung senkrecht verschoben werden, was dazu führt, dass sich das gabelförmige Ende vom Kopf ebenfalls löst. Ferner ist es denkbar, dass der Schwenkhebel mit seinem gabelförmigen Ende aus seinem Formschluss mit dem Kopf herausgedreht, herausgeschwenkt oder in einer anderen durch einen der sechs Freiheitsgrade beschriebenen Weise herausgeschoben wird.

Die vorgeschlagene Konstruktion der Achsschalteinrichtung bietet zudem die Möglichkeit, dass der Schieber den Schwenkhebel nach dessen Entkoppelung vom Kraftübertragungselement in der Entkoppelposition festhält, was den Vorteil birgt, dass die Achsschalteinrichtung immer, sowohl bei der Erstausrüstung, wie auch bei der Reparatur, montierbar ist, wenn man nur den Schieber in die Entkoppelposition bringt. Es hat sich herausgestellt, dass sich die Achsschalteinrichtung am besten dann von der Nabenachse entfernen lässt, wenn sich das Kraftübertragungselement in einer bestimmten Stellung, nämlich im kraftlosen Zustand, bezogen auf die Mehrgangnabe, befindet. In diesem Zustand kann durch Nachlassen des drahtförmigen Übertragungsteils der Formschluss zwischen dem gabelförmigen Ende und dem Kopf kraftlos gestaltet werden, so dass es ein Minimum an manueller Betätigungskraft bedarf, um den Schieber zu betätigen und somit den Schwenkhebel auszukoppeln. In diesem Fall empfiehlt sich ein Sicherungselement, welches den Schwenkhebel in der beim Entkoppelvorgang eingenommenen Position hält. Dieses Sicherungselement kann aus einem Rastenelement bestehen, welches im Gehäuse angeordnet ist und auf den Schieber wirkt. Die Freigabe des Schiebers kann entweder durch eine Rückholfeder oder aber durch eine zusätzliche manuelle Betätigungsbewegung am Schieber erfolgen, die für das Zustandekommen des Formschlusses nach dem Aufsetzen der Achsschalteinrichtung auf die Nabenachse sorgt.

Es hat sich gezeigt, dass es zweckmäßig ist, in die Lagerstellen des Schiebers eine gewisse Selbsthemmung einzubauen, die sicherstellt, dass es keine Rückkoppelung der Schaltkräfte vom Getriebe der Mehrgangnabe her auf den Koppel- und Entkoppelvorgang in Richtung zur Fernbedienung gibt. Die Schaltkräfte müssen also von der Fernbedienung zum Getriebe der Mehrgangnabe verlaufen, wobei die im Getriebe auftretenden Kräfte bzw. Reaktionskräfte nicht umgekehrt auf die Fernbedienung über das drahtförmige Übertragungsteil zurück übertragen werden.

Wurde bisher davon ausgegangen, dass die Achsschalteinrichtung vom Formschluss des Schwenkhebels mit dem Kopf des Kraftübertragungselementes in seiner Position gehalten wurde, so kann ein Getriebe einer Mehrgangnabe auch durch ein Kraftübertragungselement geschaltet werden, welches von einem Schwenkhebel durch Druckbeanspruchung bewegt wird. In diesem Falle wird vom Schieber eine Arretierung zwischen dem Gehäuse und der Nabenachse zu- oder abgeschaltet, die der Befestigung der Achsschalteinrichtung auf der Nabenachse dient.

Es ist somit die Aufgabe der Erfindung, eine Achsschalteinrichtung zu schaffen, die ohne Werkzeuge von einer Nabenachse einer Mehrgangnabe demontierbar ist, wobei die Achsschalteinrichtung mit einer Fernbedienung über ein drahtförmiges Übertragungsteil als Baueinheit sowohl im Erstausrüstungs- wie auch im Reparaturzustand auf einfache Weise mit einem Rahmen eines Fahrrades verbindbar ist.

Die Lösung der Aufgabe ist in dem Kennzeichen des Hauptanspruches beschrieben. Ausgestaltungen sind den Unteransprüchen zu entnehmen.

Anhand mehrerer Zeichnungen und Skizzen wird eine Achsschalteinrichtung für eine Mehrgangnabe für Fahrräder erläutert. Es zeigen:
- Fig. 1: eine Nabenachse in einem Rahmen eines Fahrrades mit einem Kraftübertragungselement, in welches ein Schwenkhebel mit seinem gabelförmigen Ende eingreift;
- Fig. 2: eine Achsschalteinrichtung, bestehend aus einem Gehäuse und dem gemäß Fig. 1 beschriebenen Schwenkhebel, welcher über einen Schieber aus seiner Eingriffsposition mit dem Kraftübertragungselement herausschiebbar ist;
- Fig. 3: den Schwenkhebel und den Schieber gemäß Fig. 1 mit einer Betätigungsrichtung des Schiebers in Richtung einer Schwenkachse für den Schwenkhebel.

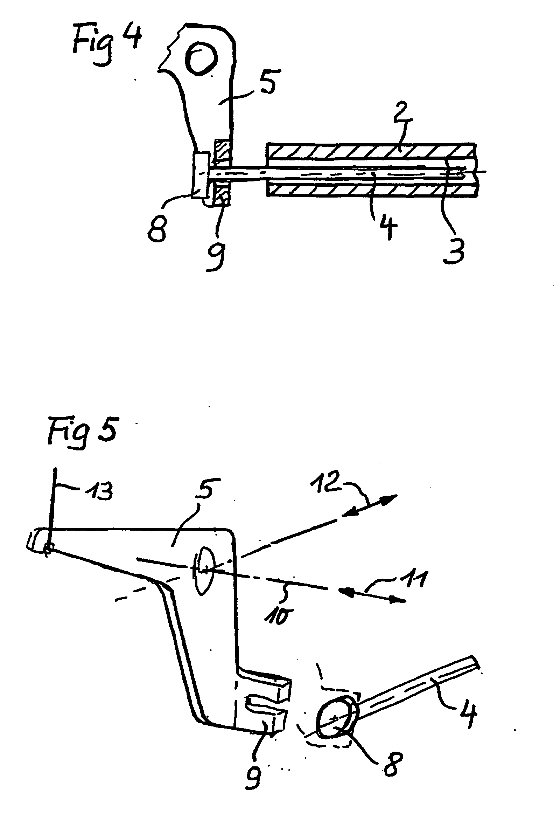

- Fig. 4: die Nabenachse mit einer Zentralbohrung und dem darin angeordneten Kraftübertragungselement mit einem Kopf, der mit dem gabelförmigen Ende des Schwenkhebels in Formschlussverbindung steht;
- Fig. 5: das Kraftübertragungselement mit dem Schwenkhebel, der in mehreren Verschieberichtungen im Gehäuse durch den Schieber verschiebbar ist.

Wird mit 1 ein Gehäuse einer Achsschalteinrichtung (7) bezeichnet, so ist in diesem ein Schwenkhebel 5 angeordnet, der auf einer Schwenkachse 10 im Gehäuse 1 gelagert ist und mit einem Ende über ein drahtförmiges Übertragungsteil 13 mit einer Fernbedienung in Verbindung steht, während das andere Ende des Schwenkhebels 5 als gabelförmiges Ende 9 ausgebildet ist, welches eine Formschlussverbindung mit einem Kopf 8 eines Kraftübertragungselementes 4 eine Formschlussverbindung eingeht. Das Kraftübertragungselement 4 ist in einer Zentralbohrung 3 einer Nabenachse 2 gelagert und mit einem Getriebe einer Mehrgangnabe zum Zwecke des Wechsels der Schaltstufen direkt verbunden. Das Kraftübertragungselement 4 wird üblicherweise von einer Rückholfeder in eine Endposition gezogen, aus der die einzelnen Gangstufen von der Fernbedienung durchschaltbar sind. Zu diesem Zeck weist der Schwenkhebel 5 ein gabelförmiges Ende 9 auf, welches den Kopf 8 hintergreift und somit eine Formschlussverbindung zwischen dem Schwenkhebel 5 und dem Getriebe der Mehrgangnabe herstellt.

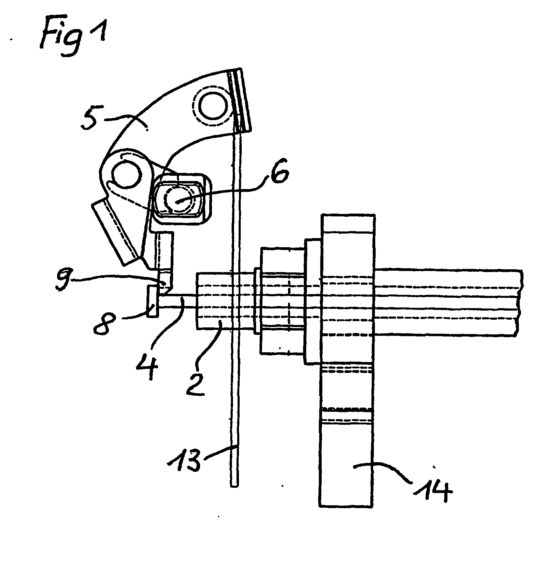

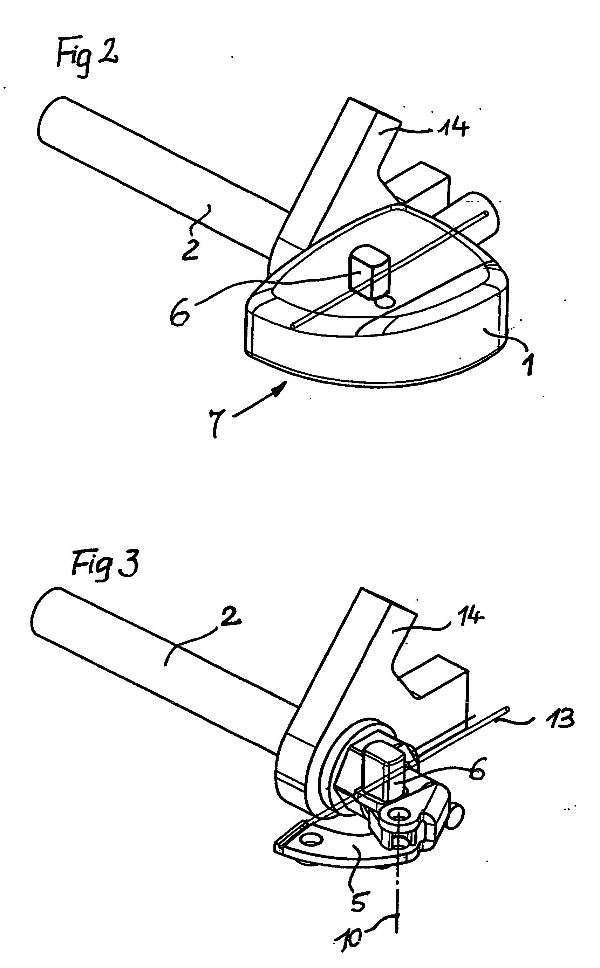

Gemäß den Fig. 1 bis 3 wird ein Schieber 6 beschrieben, der im Gehäuse 1 gelagert ist und in einer Verschieberichtung 11 parallel zu der Schwenkachse 10 betätigbar ist. Das Gehäuse 1, der Schwenkhebel 5 und der Schieber 6 bilden die wesentlichen Bestandteile der Achsschalteinrichtung 7, die auf der Nabenachse 2 montierbar bzw. demontierbar angeordnet ist. Die Nabenachse 2 ist als integraler Bestandteil der Mehrgangnabe anzusehen, die ein Getriebe aufweist, welches mit der Achsschalteinrichtung 7 über das Kraftübertragungselement 4 in Verbindung steht. Die Nabenachse 2 ist mit einem Rahmen 14 des Fahrrades fest verbunden. Diese Verbindung bleibt unberührt von den Montagen bzw. Demontagen der Achsschalteinrichtung 7 an der Nabenachse 2.

Gegenüber der Verschieberichtung 11 wird eine dazu senkrecht stehende Verschieberichtung 12 beschrieben, in der der Schwenkhebel 5 durch die Betätigung des Schiebers 6 verschiebbar sein könnte, um den Formschluss zwischen dem gabelförmigen Ende 9 und dem Kopf 8 aufzuheben. Es sind weitere Verschieberichtungen bzw. Verschwenkrichtungen denkbar, die alle konstruktiv möglich sind und als äquivalente Konstruktionen anzusehen sind und somit hier nicht mehr besonders erwähnt werden.

Es hat sich gezeigt, dass es möglich ist, eine Achsschalteinrichtung 7 zu schaffen, die durch einen Schieber 6 an der Nabenachse 2 durch eine Arretierung fixiert wird, sofern der Schwenkhebel 5 mit dem Getriebe der Mehrgangnabe über ein Druck - Kraftübertragungselement 4' in Verbindung steht. In diesem Falle hält der Formschluss zwischen dem Kopf 8 und dem gabelförmigen Ende 9 des Schwenkhebels 5 das Gehäuse 1 und somit die Achsschalteinrichtung 7 nicht mehr an der Nabenachse 2 fest, weshalb das Gehäuse 1 über die Arretierung am Ende der Nabenachse 2 befestigt sein muss. Ein Formschluss zwischen dem Schwenkhebel 5 und dem Kopf 8 des Kraftübertragungselementes 4 besteht in diesem Falle nur insofern, als der Schwenkhebel 5 auf das Druck-Kraftübertragungselement im Schaltungsfalle Druck ausübt.

Der Vorteil der Erfindung liegt in einem Schieber 6, der in dem Gehäuse 1 angeordnet ist und den Schwenkhebel 5 außer Formschluss zum Kopf 8 des Kraftübertragungselementes 4 bringen kann, wodurch die Achsschalteinrichtung 7 auf einfacher Weise ohne Zuhilfenahme von Werkzeugen von der Nabenachse 2 demontierbar ist.

### Bezugszeichenliste

- 1.: Gehäuse
- 2.: Nabenachse
- 3.: Zentralbohrung
- 4.: Kraftübertragungselement
- 4'.: Druck-Kraftübertragungselement
- 5.: Schwenkhebel
- 6.: Schieber
- 7.: Achsschalteinrichtung
- 8.: Kopf
- 9.: gabelförmiges Ende
- 10.: Schwenkachse
- 11.: Verschieberichtung
- 12.: Verschieberichtung
- 13.: drahtförmiges Übertragungsteil
- 14.: Rahmen

## Patentansprüche

1. Schaltbetätigung für Mehrgangnaben für Fahrräder
mit einem an einer Nabenachse (2) befestigten Gehäuse (1),
mit einem in einem Hohlraum der Nabenachse (2) angeordneten stangenförmigen Kraftübertragungselement (4),
wobei der Hohlraum sich in Längsrichtung der Nabenachse (2) erstreckt,
mit einer Fernbedienung zur Übertragung von Steuerbewegungen an das Kraftübertragungselement (4) über einen Schwenkhebel (5),
wobei das Kraftübertragungselement (4) gegen eine Federkraft betätigbar sein kann und
wobei das Gehäuse (1) mit dem Schwenkhebel (5) eine Achsschalteinrichtung (7) bildet,
**dadurch gekennzeichnet,**
**dass** die Achsschalteinrichtung (7) von der Nabenachse (2) ohne Zuhilfenahme von Werkzeugen mittels eines Schiebers (6) demontiert werden kann und
**dass** der Schwenkhebel (5) und das Kraftübertragungselement (4) im montierten Zustand der Achsschalteinrichtung (7) auf der Nabenachse (2) durch manuelle Betätigung des Schiebers (6) von außen entkoppelbar sind,
wobei die Betätigung des Schiebers (6) eine Bewegung des Schwenkhebels (5) bewirkt und durch diese Schwenkhebelbewegung eine formschlüssige Verbindung des Schwenkhebels (5) mit dem Kraftübertragungselement (4) lösbar ist.

2. Schaltbetätigung nach Anspruch 1,
**dadurch gekennzeichnet,**
**dass** der Schwenkhebel (5) ein gabelförmiges Ende (9) aufweist, mit dem der Schwenkhebel (5) mit dem Kraftübertragungselement (4) formschlüssig verbunden ist.

3. Schattbetätigung nach Anspruch 1 oder 2,
**dadurch gekennzeichnet,**
**dass** die formschlüssige Verbindung des Schwenkhebels (5) mit dem Kraftübertragungselement (4) im Wesentlichen in einer Ebene senkrecht zur Nabenachse (2) entkoppelbar ist.

4. Schaltbetätigung nach einem der Ansprüche 1 bis 3, **dadurch gekennzeichnet, dass** der Schieber (6) für das Entkoppeln des Schwenkhebels (5) vom Kraftübertragungselement (4) für eine manuelle Verschiebung ausgelegt ist.

5. Schaltbetätigung nach Anspruch 4,
**dadurch gekennzeichnet,**
**dass** die Bewegung des Schiebers (6) in einer Richtung im Wesentlichen senkrecht zur Nabenachse (2) erfolgt.

6. Schaltbetätigung nach Anspruch 4,
**dadurch gekennzeichnet,**
**dass** der Schwenkhebel (5) beim Entkoppeln seines gabelförmigen Endes 19) um eine Achse (12) in einer Verschieberichtung gedreht wird, die parallel zur Nabenachse (2) verläuft.

7. Schaltbetätigung nach Anspruch 4,
**dadurch gekennzeichnet,**
**dass** der Schwenkhebel (5) beim Entkoppeln seines gabelförmigen Endes (9) entlang einer Geradführung in einer Richtung (11) im wesentlichen senkrecht zur Nabenachse (2) bewegt wird.

8. Schaltbetätigung nach Anspruch 7,
**dadurch gekennzeichnet,**
**dass** der Schieber (6) den Schwenkhebel (5) nach dessen Entkoppelung vom Kraftübertragungselement (4) in der Entkoppelposition festhält.

9. Schaltbetätigung nach Anspruch 7,
**dadurch gekennzeichnet,**
**dass** die Entkoppelung des Schwenkhebels (5) vom Kraftübertragungselement (4) nur in bestimmten Stellungen des Kraftübertragungselementes (4) möglich ist.

10. Schaltbetätigung nach Anspruch 9,
**dadurch gekennzeichnet,**
**dass** die Entkoppelung des Schwenkhebels (5) vom Kraftübertragungselement (4) im kraftlosen Zustand des Kraftübertragungselementes (4) möglich ist.

11. Schaltbetätigung nach Anspruch 9 oder 10,
**dadurch gekennzeichnet,**
**dass** der Schieber (6) den Schwenkhebel (5) in der beim Entkoppeln eingenommenen Position hält und sichert.

12. Schaltbetätigung nach einem der Ansprüche 1 bis 11,
**dadurch gekennzeichnet,**
**dass** der Schieber (6) zur Fixierung der axialen Position der Achsschalteinrichtung (7) auf der Nabenachse (2) dient.

13. Schaltbetätigung nach einem der Ansprüche 1 bis 12,
**dadurch gekennzeichnet,**
**dass** die Verschiebe- und/oder Verschwenkbewegung zur Entkoppelung des Schwenkhebels (5) vom Kraftübertragungselement (4) gegen eine Federkraft erfolgt.

14. Schaltbetätigung nach einem der Ansprüche 1 bis 13,
**dadurch gekennzeichnet,**
**dass** der Schieber (6) mit dem Schwenkhebel (5) formschlüssig zusammenwirkt, wenn die Verschiebe- und/oder Verschwenkbewegung des Schwenkhebels (5) diesen mit dem Kraftübertragungselement (4) entweder koppeln oder entkoppeln.

15. Schaltbetätigung nach Anspruch 1 oder 14,
**dadurch gekennzeichnet,**
**dass** der Schieber (6) in seinen Lagerstellen eine Selbsthemmung aufweist, die sicherstellt, dass zwar Schaltkräfte von der Fernbedingung zur Mehrgangnabe, nicht aber umgekehrt verlaufen können, wodurch also eine Rückkopplung der Schaltkräfte auf den Koppel- und Entkoppelvorgang vermieden wird.

16. Schaltbetätigung nach einem der Ansprüche 1 bis 15,
**dadurch gekennzeichnet,**
**dass** der Schieber (6) bei einer Version mit einem Druck-Kraftübertragungselement (4') der Arretierung der Achsschalteinrichtung (7) an der Nabenachse (2) dient.

17. Schaltbetätigung nach einem der Ansprüche 1 bis 16,
**dadurch gekennzeichnet,**
**dass** der Schieber (6) eine Rückholfeder aufweisen kann, die bei seiner manuellen Betätigung zum Entkoppeln des Schwenkhebels (5) vom Kraftübertragungselement (4) überdrückt und gehalten werden muss.

## Claims

1. Gear change for multispeed hubs for bicycles with a housing (1) fastened to a hub axle (2), with a rod-shaped force transmission element (4) arranged in a cavity of the hub axle (2), the cavity extending in the longitudinal direction of the hub axle (2), with a remote control for transmitting control movements to the force transmission element (4) via a pivoting lever (5), it being possible for the force transmission element (4) to be actuatable counter to a spring force and the housing (1) forming with the pivoting lever (5) an axle shift device (7), **characterized in that** the axle shift device (7) can be demounted from the hub axle (2) by means of a slide (6) without the aid of tools and **in that** the pivoting lever (5) and the force transmission element (4) can in the mounted state of the axle shift device (7) on the hub axle (2) be uncoupled from outside by manual actuation of the slide (6), the actuation of the slide (6) causing a movement of the pivoting lever (5) and a positive connection of the pivoting lever (5) to the force transmission element (4) being releasable by this pivoting lever movement.

2. Gear change according to Claim 1, **characterized in that** the pivoting lever (5) has a fork-shaped end (9), with which the pivoting lever (5) is connected positively to the force transmission element (4).

3. Gear change according to Claim 1 or 2, **characterized in that** the positive connection of the pivoting lever (5) to the force transmission element (4) can be uncoupled essentially in a plane at right angles to the hub axle (2).

4. Gear change according to one of Claims 1 to 3, **characterized in that** the slide (6) for uncoupling the pivoting lever (5) from the force transmission element (4) is designed for manual displacement.

5. Gear change according to Claim 4, **characterized in that** the movement of the slide (6) takes place in a direction essentially at right angles to the hub axle (2).

6. Gear change according to Claim 4, **characterized in that** the pivoting lever (5) is, when uncoupling of its fork-shaped end (9) takes place, rotated about an axis (12) in a displacement direction which runs parallel to the hub axle (2).

7. Gear change according to Claim 4, **characterized in that** the pivoting lever (5) is, when uncoupling of its fork-shaped end (9) takes place, moved along a straight guide in a direction (11) essentially at right angles to the hub axle (2).

8. Gear change according to Claim 7, **characterized in that** the slide (6) retains the pivoting lever (5) in the uncoupling position after its uncoupling from the force transmission element (4).

9. Gear change according to Claim 7, **characterized in that** the uncoupling of the pivoting lever (5) from the force transmission element (4) is possible only in given positions of the force transmission element (4).

10. Gear change according to Claim 9, **characterized in that** the uncoupling of the pivoting lever (5) from the force transmission element (4) is possible in the force-free state of the force transmission element (4).

11. Gear change according to Claim 9 or 10, **characterized in that** the slide (6) holds and secures the pivoting lever (5) in the position occupied when uncoupling takes place.

12. Gear change according to one of Claims 1 to 11, **characterized in that** the slide (6) serves for fixing the axial position of the axle shift device (7) on the hub axle (2).

13. Gear change according to one of Claims 1 to 12, **characterized in that** the displacement movement and/or pivoting movement for uncoupling the pivoting lever (5) from the force transmission element (4) takes place counter to a spring force.

14. Gear change according to one of Claims 1 to 13, **characterized in that** the slide (6) interacts positively with the pivoting lever (5) when the displacement movement and/or pivoting movement of the pivoting lever (5) either couple or uncouple the latter and the force transmission element (4).

15. Gear change according to Claim 1 or 14, **characterized in that** the slide (6) has a self-locking in its bearings, which ensures that while shifting forces can pass from the remote control to the multispeed hub they cannot in the opposite direction, by virtue of which feedback of the shifting forces to the coupling and uncoupling operation is avoided.

16. Gear change according to one of Claims 1 to 15, **characterized in that** the slide (6) serves for locking the axle shift device (7) on the hub axle (2) in a version with a pressure force transmission element (4').

17. Gear change according to one of Claims 1 to 16, **characterized in that** the slide (6) can have a restoring spring which, when the slide is manually actuated for uncoupling the pivoting lever (5) from the force transmission element (4), has to be overpressed and held.

## Revendications

1. Changement de vitesse pour moyeu à plusieurs vitesses de bicyclette, comprenant un boîtier (1) fixé à un axe de moyeu (2) avec un élément de transfert de force (4) en forme de barre disposé dans un espace creux de l'axe de moyeu (2), l'espace creux s'étendant dans la direction longitudinale de l'axe de moyeu (2), avec une commande à distance pour le transfert de mouvements de commande à l'élément de transfert de force (4) par le biais d'un levier pivotant (5), l'élément de transfert de force (4) pouvant être actionné à l'encontre de la force d'un ressort, et le boîtier (1) formant avec le levier pivotant (5) un dispositif de changement d'axe (7),
**caractérisé en ce que**
le dispositif de changement d'axe (7) peut être démonté de l'axe de moyeu (2) sans utiliser d'outils au moyen d'un coulisseau (6) et **en ce que** le levier pivotant (5) et l'élément de transfert de force (4) peuvent être désaccouplés de l'extérieur par un actionnement manuel du coulisseau (6) dans l'état monté du dispositif de changement d'axe (7) sur l'axe de moyeu (2), l'actionnement du coulisseau (6) provoquant un déplacement du levier pivotant (5) et grâce à ce mouvement du levier pivotant, une connexion par coopération de forme du levier pivotant (5) à l'élément de transfert de force (4) pouvant être libérée.

2. Changement de vitesse selon la revendication 1,
**caractérisé en ce que**
le levier pivotant (5) présente une extrémité en forme de fourche (9) avec laquelle le levier pivotant (5) est connecté par coopération de forme avec l'élément de transfert de force (4).

3. Changement de vitesse selon la revendication 1 ou 2,
**caractérisé en ce que**
la connexion par coopération de forme du levier pivotant (5) à l'élément de transfert de force (4) peut être désaccouplée essentiellement dans un plan perpendicualire à l'axe de moyeu (2).

4. Changement de vitesse selon l'une quelconque des revendications 1 à 3,
**caractérisé en ce que**
le coulisseau (6) est conçu pour le désaccouplement du levier pivotant (5) de l'élément de transfert de force (4) en vue d'un déplacement manuel.

5. Changement de vitesse selon la revendication 4,
**caractérisé en ce que**
le mouvement du coulisseau (6) s'effectue dans une direction essentiellement perpendiculaire à l'axe de moyeu (2).

6. Changement de vitesse selon la revendication 4,
**caractérisé en ce que**
le levier pivotant (5) est tourné dans une direction de déplacement autour d'un axe (12) qui s'étend parallèlement à l'axe de moyeu (2), lors du désaccouplement de son extrémité en forme de fouche (9).

7. Changement de vitesse selon la revendication 4,
**caractérisé en ce que**
le levier pivotant (5) est déplacé dans une direction (11) essentiellement perpendiculaire à l'axe de moyeu (2) lors du désaccouplement de son extrémité en forme de fourche (9), le long d'une coulisse rectiligne.

8. Changement de vitesse selon la revendication 7,
**caractérisé en ce que**
le coulisseau (6) fixe le levier pivotant (5) après son désaccouplement de l'élément de transfert de force (4) dans la position de désaccouplement.

9. Changement de vitesse selon la revendication 7,
**caractérisé en ce que**
le désaccouplement du levier pivotant (5) de l'élément de transfert de force (4) est seulement possible dans certaines positions de l'élément de transfert de force (4).

10. Changement de vitesse selon la revendication 9,
**caractérisé en ce que**
le désaccouplement du levier pivotant (5) de l'élément de transfert de force (4) est possible dans un état sans force de l'élément de transfert de force (4).

11. Changement de vitesse selon la revendication 9 ou 10,
**caractérisé en ce que**
le coulisseau (6) retient et fixe le levier pivotant (5) dans la position adoptée lors du désaccouplement.

12. Changement de vitesse selon l'une quelconque des revendications 1 à 11,
**caractérisé en ce que**
le coulisseau (6) sert à la fixation de la position axiale du dispositif de changement d'axe (7) sur l'axe de moyeu (2).

13. Changement de vitesse selon l'une quelconque des revendications 1 à 12,
**caractérisé en ce que**
le mouvement de déplacement et/ou de pivotement pour le désaccouplement du levier pivotant (5) de l'élément de transfert de force (4) s'effectue à l'encontre d'une force de ressort.

14. Changement de vitesse selon l'une quelconque des revendications 1 à 13,
**caractérisé en ce que**
le coulisseau (6) coopère par coopération de forme avec le levier pivotant (5) lorsque le mouvement de déplacement et/ou de pivotement du levier pivotant (5) accouple ou désaccouple ce dernier à l'élément de transfert de force (4).

15. Changement de vitesse selon la revendication 1 ou 14,
**caractérisé en ce que**
le coulisseau (6) présente dans sa position de support un auto-blocage qui garantit que certes des forces de changement de vitesse peuvent s'exercer de la commande à distance au moyeu à plusieurs vitesses mais pas dans l'autre sens, ce qui permet donc d'éviter un couplage en retour des forces de changement de vitesse sur l'opération de d'accouplement et de désaccouplement.

16. Changement de vitesse selon l'une quelconque des revendications 1 à 15,
**caractérisé en ce que**
le coulisseau (6), dans le cas d'une version avec un élément de transfert de force par pression (4'), sert au blocage du dispositif de changement d'axe (7) sur l'axe de moyeu (2).

17. Changement de vitesse selon l'une quelconque des revendications 1 à 16,
**caractérisé en ce que**
le coulisseau (6) peut présenter un ressort de rappel, qui doit être surmonté et fixé lors de son actionnement manuel pour le désaccouplement du levier pivotant (5) de l'élément de transfert de force (4).
